# EUROPÄISCHE PATENTSCHRIFT

(11) **EP 2 074 915 B1**
(45) Veröffentlichungstag und Bekanntmachung des Hinweises auf die Patenterteilung: **24.08.2011**
(21) Anmeldenummer: 08106025.3
(22) Anmeldetag: 22.12.2008
(51) Int. Cl.: A47J 27/21

(54) **Elektrisches Haushaltsgerät**
Electric household device
Appareil ménager électrique

(30) Priorität: 29.12.2007 CN 200710302600
(43) Veröffentlichungstag der Anmeldung: 01.07.2009
(73) Patentinhaber: BSH Bosch und Siemens Hausgeräte GmbH, 81739 München (DE)
(72) Erfinder: Hu, Hengzhong, 225652 Jiangsu Gaoyou (CN); Schröder, Bernd, 210008 Nanjing (CN)

(56) Entgegenhaltungen:
- EP-A- 0 319 889
- WO-A-2006/062343
- CN-Y- 2 508 145
- DE-A1- 2 929 177

## Beschreibung

Die vorliegende Erfindung betrifft ein elektrisches Haushaltsgerät, insbesondere einen Warmwasserspeicher, welches ein Gehäuse sowie eine mit dem Gehäuse in abnehmbarer Art und Weise verbundene Wartungs- und Reparaturabdeckung zum Schließen einer Öffnung aufweist, wobei das Gehäuse eine Öffnung aufweist, welche dafür vorgesehen ist, zwischen einem Ende eines Kabels und den innerhalb des Gehäuses befindlichen elektrischen Elementen eine Verbindung herzustellen, wobei die Öffnung von einer in abnehmbarer Art und Weise mit dem Gehäuse verbundenen Abdeckung zumindest teilweise verschlossen wird und wobei nach erfolgter Verbindung des Kabels mit den elektrischen Elementen sich das andere Ende des Kabels außerhalb des Gehäuses befindet.

Die CN 2508145 Y offenbart die Konstruktion des Gehäuses eines Warmwasserspeichers, wobei das Gehäuse eine runde Endabdeckung sowie ein an der Endabdeckung vorgesehenes und mit einer Öffnung versehenes elektrisches Element für Überprüfung/Wartung und Reparatur sowie ein innerhalb des Gehäuses vorgesehenes elektrisches Element aufweist. Eine runde Wartungs- und Reparaturabdeckung wird in abnehmbarer Art und Weise an der Endabdeckung befestigt. An der inneren Ringseitenwand der Endabdeckung wird eine rundringförmige Einbuchtungsrille vorgesehen, wobei der Umgebungsrand der Wartungs- und Reparaturabdeckung in die rundringförmige Einbuchtungsrille einfasst. Gleichzeitig werden an der Einbuchtungsrille der Wartungs- und Reparaturabdeckung mehrere Ausbuchtungen vorgesehen und an der äußeren Umgebungsseitenwand der Wartungs- und Reparaturabdeckung werden diesen Ausbuchtungen entsprechende Aussparungen vorgesehen, so dass der Rand der Wartungs- und Reparaturabdeckung nach Einfassen in die rundringförmige Einbuchtungsrille der Endabdeckung von den Ausbuchtungen festgeklemmt wird.

Der Rand der Wartungs- und Reparaturabdeckung bildet eine halbkreisförmige Einbuchtungsöffnung, wobei die Einbuchtungsöffnung gemeinsam mit der anderen an der Endabdeckung vorgesehenen Einbuchtungsöffnung eine Öffnung bildet, welche die Durchführung von Kabeln ermöglicht. Normalerweise wird eine solche Öffnung von einer Abdeckung verschlossen. Bei dem gegenwärtig bekannten Stand der Technik wird die Abdeckung allerdings in Verbindung mit der Wartungs- und Reparaturabdeckung an der Endabdeckung angebracht. Das Wartungs- und Reparaturpersonal muss bei der Durchführung von Überprüfungen und Reparaturen im Inneren des Warmwasserspeichers die Wartungs- und Reparaturabdeckung öffnen, wobei zunächst die Abdeckung abgenommen werden muss, um anschließend die Wartungs- und Reparaturabdeckung abnehmen zu können. Andererseits wird eine solche Abdeckung normalerweise mit Schrauben befestigt. Aus diesem Grund ist die gegenwärtig vorhandene Konstruktion von Warmwasserspeichern nicht gut für die Durchführung von Überprüfungen und Reparaturen durch Arbeiter oder Wartungs- und Reparaturpersonal geeignet.

Eine solche Vorrichtung ist in der EP 0 319 889 A2 gezeigt, wo eine an einer Gerätewand befestigbaren Steckdose mit einem Klappdeckel offenbart ist Der Klappdeckel weist eine Steckachse auf, so dass die Montage und Demontage schnell und einfach erfolgen kann.

Somit ergibt sich die Aufgabe der vorliegenden Erfindung ein elektrisches Haushaltsgerät bereitzustellen, welches für die vereinfachte Durchführung von Überprüfungen und/oder Reparaturen durch Arbeiter oder Wartungs- und/oder Reparaturpersonal geeignet ist.

Diese Aufgabe wird durch ein elektrisches Haushaltsgerät mit den Merkmalen des unabhängigen Anspruches gelöst. Vorteilhafte Aus- und Weiterbildungen, welche einzeln oder in Kombination miteinander eingesetzt werden können, sind Gegenstand der abhängigen Ansprüche.

Das erfindungsgemäße elektrische Haushaltsgerät baut auf gattungsgemäßen Haushaltsgeräten dadurch auf, dass die Abdeckung unabhängig von der Wartungs- und Reparaturabdeckung an dem Gehäuse anbringbar ist.

Die vorliegende Erfindung betrifft ein elektrisches Haushaltsgerät, welches ein Gehäuse sowie eine mit dem Gehäuse in abnehmbarer Art und Weise verbundene Wartungs- und Reparaturabdeckung zum Schließen einer Öffnung aufweist, wobei das Gehäuse eine Öffnung aufweist, welche dafür vorgesehen ist, zwischen einem Ende eines Kabels und den innerhalb des Gehäuses befindlichen elektrischen Elemente eine Verbindung herzustellen, wobei die Öffnung von einer in abnehmbarer Art und Weise mit dem Gehäuse verbundenen Abdeckung zumindest teilweise verschlossen wird und wobei nach erfolgter Verbindung des Kabels mit den elektrischen Elementen sich das andere Ende des Kabels außerhalb des Gehäuses befindet, dadurch gekennzeichnet, dass die Abdeckung unabhängig von der Wartungs- und Reparaturabdeckung an dem Gehäuse anbringbar ist.

Da die betreffende Abdeckung unabhängig von der Wartungs- und Reparaturabdeckung an dem Gehäuse angebracht wird, sind Montage und Demontage beider Komponenten unabhängig voneinander möglich. Aus diesem Grund muss das Wartungs- und Reparaturpersonal bei erforderlicher Abnahme der Wartungs- und Reparaturabdeckung zur Durchführung von Überprüfungen beziehungsweise Reparaturen im Inneren des elektrischen Haushaltsgerätes nicht zuvor die mit Kabeln verbundene Abdeckung abnehmen, bevor die Wartungs- und Reparaturabdeckung abgenommen werden kann. Dies vermindert einerseits Störungen der entsprechenden mit Kabel verbundenen elektrischen Elemente und steigert gleichzeitig die Arbeitseffektivität des Wartungs- und Reparaturpersonals erheblich.

Vorteilhafte Ausgestaltungen der vorliegenden Erfindung sind Gegenstand der abhängigen Ansprüche, welche einzeln oder in Kombination miteinander eingesetzt werden können.

Zwar ist auch die Anbringung der Abdeckung in unmittelbarer Nähe der Wartungs- und Reparaturabdeckung möglich, aber gemäß einem vorteilhaften Ausführungsbeispiel der vorliegenden Erfindung wird ein Abstand zwischen der Abdeckung und der Wartungs- und Reparaturabdeckung vorgesehen.

Besonders vorteilhaft ist es, wenn sich die Wartungs- und Reparaturabdeckung und die Abdeckung auf der gleichen Ebene befinden.

Gemäß einem weiteren Ausführungsbeispiel der vorliegenden Erfindung weist das vorliegende Gehäuse eine Kabelausführungsöffnung zur Durchführung des Kabels auf, wobei sich die betreffende Kabelausführungsöffnung in der Nähe der Öffnung befindet.

Vorzugsweise wird die Ebene, auf welcher sich die Öffnung befindet, senkrecht zu der Ebene, auf welcher sich die Kabelausführungsöffnung befindet, positioniert.

Gemäß einem weiteren Ausführungsbeispiel der vorliegenden Erfindung wird das Kabel in der Kabelausführungsöffnung gehalten. Alternativ wird der zwischen dem elektrischen Element und der Kabelausführungsöffnung befindliche Teil des Kabels festgehalten. Es ist offensichtlich, dass das Kabel sowohl in der Kabelausführungsöffnung gehalten werden kann als auch, dass der zwischen dem elektrischen Element und der Kabelausführungsöffnung befindliche Teil des Kabels festgehalten wird.

Bei einem besonders vorteilhaften Ausführungsbeispiel der vorliegenden Erfindung sind die Öffnung und die Kabelausführungsöffnung durchgängig miteinander verbunden.

Es ist besonders vorteilhaft, wenn bei fehlender Durchführung eines Kabels durch die Kabelausführungsöffnung die Kabelausführungsöffnung geschlossen wird. Auf diese Weise kann das betreffende Gehäuse für elektrische Haushaltsgeräte mit verschiedenen Steuerungsausführungen verwendet werden, was sich sehr positiv hinsichtlich der Herstellung auswirkt.

Gemäß einem weiteren Ausführungsbeispiel der vorliegenden Erfindung weist das Gehäuse einen Behälter sowie eine mit dem Behälter verbundene Endabdeckung auf, wobei die Wartungs- und Reparaturabdeckung und die Abdeckung jeweils mit der Endabdeckung verbunden werden.

Besonders vorteilhaft ist es, wenn die Endabdeckung eine Bodenplatte sowie einen sich aus der betreffenden Bodenplatte heraus erstreckende und im Wesentlichen senkrecht zu der betreffenden Bodenplatte positionierte Umrandungswand aufweist, wobei die Abdeckung und die Wartungs- und Reparaturabdeckung jeweils mit der Bodenplatte verbunden werden.

Besonders vorteilhaft ist es, wenn die Kabelausführungsöffnung an der Umrandungswand gebildet wird.

Gemäß einem vorteilhaften praktischen Ausführungsbeispiel der vorliegenden Erfindung weist die Endabdeckung eine innerhalb vom Gehäuse befindliche und parallel zur Bodenplatte vorgesehene Stützwand auf, wobei die betreffende Stützwand einen Aufnahmesockel bildet, welcher passend zu dem zur Befestigung der Abdeckung vorgesehenen Befestigungselement vorgesehen wird.

Besonders vorteilhaft ist es, wenn sich die Stützwand von der Innenseite der Umrandungswand her erstreckt.

Bei einem vorteilhaften Ausführungsbeispiel weist die Wartungs- und Reparaturabdeckung eine an ihrer Innenseite vorgesehene Verbindungswand zur Verbindung mit dem Gehäuse auf, wobei die Verbindungswand zumindest teilweise Abstand zu dem Rand der Wartungs- und Reparaturabdeckung hält. Die Form der Wartungs- und/oder Reparaturabdeckung unterliegt somit nicht länger Beschränkungen durch die Form der Verbindungswand. Aus diesem Grund kann selbst bei verschiedenen Formen von Wartungs- und Reparaturabdeckungen die Konstruktion des Gehäuses unverändert gelassen werden.

Vorzugsweise wird ein außerhalb vom Gehäuse befindliches Ende des Kabels mit einem zur Steuerung des elektrischen Haushaltsgeräts verwendeten Steuerungsschalter verbunden.

Vorzugsweise kann das elektrische Haushaltsgerät ein Warmwasserspeicher sein, welcher einen Wasserspeicherbehälter sowie eine Wärmeisolationsschicht aufweist, die zwischen dem Gehäuse und dem Wasserbehälter vorgesehen ist.

Weitere vorteilhafte Ausgestaltungen werden nachfolgend an Hand der in der Zeichnung dargestellten Ausführungsbeispiele, auf welchen die Erfindung jedoch nicht beschränkt ist, näher beschrieben.

Es zeigen schematisch:
- Fig. 1: die teilweise, dreidimensionale Darstellung eines Warmwasserspeichers gemäß einem vorteilhaften Ausführungsbeispiel der vorliegenden Erfindung;
- Fig. 2: die dreidimensionale Darstellung der Endabdeckung mit montierter Wartungs- und Reparaturabdeckung und Abdeckung;

- Fig. 3: die dreidimensionale Darstellung der Endabdeckung bei abgenommener Wartungs- und Reparaturabdeckung aus einem anderen Winkel;
- Fig. 4: die dreidimensionale Darstellung der Wartungs- und Reparaturabdeckung;
- Fig. 5: die vergrößerte Darstellung des Bereiches mit vorgesehener Öffnung und montiertem Kabel; und
- Fig. 6: die vergrößerte Darstellung des Bereiches mit vorgesehener Öffnung entsprechend einem anderen vorteilhaften Ausführungsbeispiel.

Bei der nachstehend aufgeführten detaillierten Beschreibung der vorteilhaften Ausführungsbeispiele weisen gleiche oder ähnliche Komponenten dieselben Bezugszeichen auf.

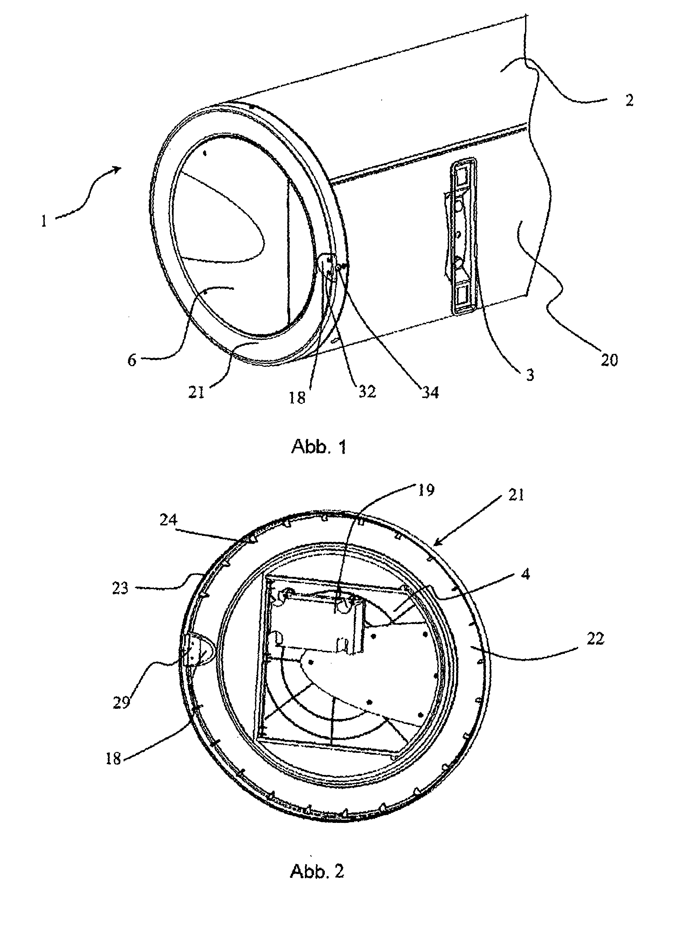

Bei der Fig. 1 handelt es sich um die teilweise, dreidimensionale Darstellung eines Warmwasserspeichers gemäß einem vorteilhaften Ausführungsbeispiel der vorliegenden Erfindung. Bei dem betreffenden elektrischen Haushaltsgerät handelt es sich um ein Warmwasserspeicher 1. Es ist hervorzuheben, dass die vorliegende Erfindung keineswegs hierauf beschränkt ist, sondern dass die vorliegende Erfindung auch auf andere elektrische Haushaltsgeräte angewendet werden kann - beispielsweise auf elektrische Kühlschränke usw. Der Warmwasserspeicher 1 weist ein Gehäuse 2, einen innerhalb vom Gehäuse 2 vorgesehenen Wasserbehälter (nicht dargestellt) sowie eine zwischen Wasserbehälter und Gehäuse 2 befindliche Wärmeisolationsschicht (nicht dargestellt) auf. Das Gehäuse 2 weist einen im Wesentlichen zylindrisch geformten Behälter 20 mit Öffnungen an seinen beiden Enden sowie jeweils mit den beiden Enden von betreffendem Behälter 20 verbundenen Endabdeckungen 21 auf. An einer Seite vom Behälter 20 wird ein Hängeteil 3 vorgesehen, um den Warmwasserspeicher 1 an einer Wand zu befestigen. Die Wartungs- und Reparaturabdeckung 6 und die mit Kabeln verbundene Abdeckung 18 werden an einer der beiden Endabdeckungen 21 (Endabdeckung 21 wie in Fig. 1 dargestellt) angebracht. Nachstehend aufgeführt erfolgt eine konkrete Beschreibung der Endabdeckung 21 mit montierter Wartungs- und Reparaturabdeckung 6 und Abdeckung 18.

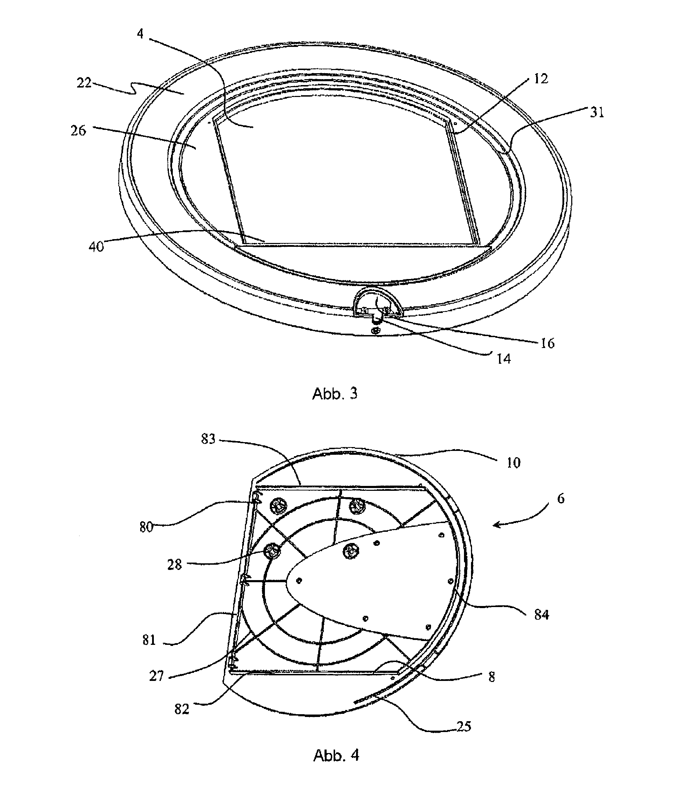

Bei der Fig. 2 handelt es sich um die dreidimensionale Darstellung der Endabdeckung 21 mit montierter Wartungs- und Reparaturabdeckung 6 und Abdeckung 18. Bei der Fig. 3 handelt es sich um die dreidimensionale Darstellung der Endabdeckung 21 bei abgenommener Wartungs- und Reparaturabdeckung 6 und Endabdeckung 18. Wie in Fig. 2 gezeigt weist die Endabdeckung 21 eine Bodenplatte 22 sowie eine sich entlang des Randes von Bodenplatte 22 senkrecht erstreckende Umrandungswand 23 auf. Mehrere Halteplatten 24 werden entlang der Innenseite der Umrandungswand 23 vorgesehen. Nach erfolgter Befestigung der Endabdeckung 21 an den Behälter 20 wird das Ende der Seitenwand vom Behälter 20 zwischen den betreffenden Halteplatten 24 und der Umrandungswand 23 festgehalten.

Wie in Fig. 2 und Fig. 3 gezeigt, wird die Öffnung 4 in dem mittleren Bereich der Endabdeckung 21 vorgesehen. Durch die Öffnung 4 können Arbeiter/Wartungs- und Reparaturpersonal im Inneren von Gehäuse 2 befindliche Teile warten beziehungsweise reparieren - beispielsweise Heizelement, Magnesiumstab und/oder Stromkreisplatte des Warmwasserspeichers 1. Unter normalen Umständen wird die Öffnung 4 von einer in abnehmbarer Art und Weise am Gehäuse 2 vorgesehenen Wartungs- und Reparaturabdeckung 6 verschlossen (wie in Fig. 1 und 2 gezeigt). Entlang der betreffenden Öffnung 4 wird an der Endabdeckung 21 eine schmale längliche Einbuchtungsrille 12 vorgesehen, um die Verbindungswand 8 der Wartungs- und Reparaturabdeckung 6 aufzunehmen und die Wartungs- und Reparaturabdeckung 6 an der Bodenplatte 22 zu befestigen.

Bei der Fig.4 handelt es sich um die dreidimensionale Darstellung der von der Endabdeckung 21 abgenommenen Wartungs- und Reparaturabdeckung 6. Wie in Fig. 4 gezeigt weist die Wartungs- und Reparaturabdeckung 6 im Wesentlichen eine Plattengestalt auf, wobei deren Rand 10 einen bogenförmigen Teil sowie einen mit den beiden Enden des betreffenden bogenförmigen Teils verbundenen geradlinigen Teil aufweist. Die Innenseite der betreffenden Wartungs- und Reparaturabdeckung 6 - also die dem Gehäuse 2 zugewandte Seite - weist eine Verbindungswand 8 auf, welche einen bestimmten Abstand zum Rand 10 der Wartungs- und Reparaturabdeckung 6 hält.

Die Verbindungswand 8 weist einen mit mehreren Hakenteilen 80 versehenen ersten Teil 81 sowie einen jeweils mit betreffendem ersten Teil 81 verbundenen parallel angeordneten zweiten Teil 82 und dritten Teil 83 auf. Die Höhe des erstens Teil 81 ist geringer als die des zweiten Teils und dritten Teils 82, 83. Der zweite Teil 82 und der dritte Teil 83 sind in waagerechter Richtung gerade, so dass bei der Montage die Wartungs- und Reparaturabdeckung 6 durch den zweiten Teil 82 und den dritten Teil 83 und entlang der Öffnung 4 von Endabdeckung 21 in die vorgesehene Einbuchtungsrille 12 eingepasst werden kann und exakt dafür sorgt, dass das Hakenteil 80 in die innere Oberfläche von Endabdeckung 21 einfassen kann. Die betreffende Verbindungswand 8 weist außerdem einen entsprechend zum ersten Teil 81 vorgesehenen sowie mit dem zweiten Teil 82 und dritten Teil 83 verbundenen vierten Teil 84 auf, wobei der betreffende vierte Teil 84 eine Bogenform aufweist.

Durch die Abstimmung der Konstruktion der Verbindungswand 8 und Endabdeckung 21 wird die Wartungs- und Reparaturabdeckung 6 mit der Endabdeckung 21 verbunden. Bei der Montage erfolgt über den in der Nähe vom Ende des ersten Teils 81 befindlichen zweiten Teil 82 und dritten Teil 83 an der entsprechenden Stelle der Einbuchtungsrille 12 die Einpassung, so dass das am ersten Teil 81 befindliche Hakenteil 80 durch die Öffnung 4 in die innere Oberfläche von Endabdeckung 21 einfasst, während der betreffende erste Teil 81 gegen den Rand 40 der Öffnung 4 stößt. Auf diese Weise kann die Wartungs- und Reparaturabdeckung 6 mit dem Rand 40 von Öffnung 4 als Achse eine Drehbewegung in einem bestimmten Winkel vornehmen. Anschließend werden der zweite Teil, dritte Teil und vierte Teil 82, 83, 84 von Verbindungswand 8 in der Einbuchtungsrille 12 aufgenommen. Ein Teil von Verbindungswand 8 stößt gegen den Rand 40 von Öffnung 4, während der übrige Teil in die schmale längliche Einbuchtungsrille 12 einfasst, so dass die Wartungs- und Reparaturabdeckung 6 zuverlässig am Gehäuse 2 positioniert wird und gleichzeitig ein recht guter Dichtungseffekt bewirkt wird.

Bei dem praktischen Ausführungsbeispiel fassen der zweite, dritte und vierte Teil 82, 83, 84 von Verbindungswand 8 in die an dem Gehäuse 2 befindliche Einbuchtungsrille 12 ein, während der erste Teil 81 gegen einen Rand von Öffnung 4 stößt. Allerdings ist die vorliegende Erfindung nicht hierauf beschränkt. Es ist auch möglich, dass sämtliche Teile der Verbindungswand 8 in die Einbuchtungsrille 12 einfassen beziehungsweise dass sämtliche Teile gegen den Rand von Öffnung 4 stoßen. Außerdem weist bei dem praktischen Ausführungsbeispiel die Verbindungswand 8 sämtlich einen bestimmten Abstand zum Rand 10 von Wartungs- und Reparaturabdeckung 6 auf. Allerdings ist die vorliegende Erfindung nicht hierauf beschränkt. Es ist auch möglich, dass bei anderen praktischen Ausführungsbeispielen ein Teil der Verbindungswand 8 Abstand zum Rand 10 von Wartungs- und Reparaturabdeckung 6 hält, während ein anderer Teil über den Rand 10 der Wartungs- und Reparaturabdeckung 6 hervorragt.

Vorzugsweise wird zwischen dem Rand 10 von Wartungs- und Reparaturabdeckung 6 und der Verbindungswand 8 außerdem eine Wand 25 vorgesehen, deren Höhe niedriger als die der Verbindungswand 8 ist, wobei die betreffende Wand 25 in die an der Endabdeckung 21 vorgesehene schmale Rille 31 einfasst, so dass die Wartungs- und Reparaturabdeckung 6 noch zuverlässiger mit dem Gehäuse 2 verbunden werden kann.

An der Innenseite der Wartungs- und Reparaturabdeckung 6 wird eine Verbindungskonstruktion 28 zur Befestigung einer Stromkreisplatte 19 vorgesehen, um die Stromkreisplatte 19 an der Innenseite der Wartungs- und Reparaturabdeckung 6 zu befestigen. Bei dem vorliegenden praktischen Ausführungsbeispiel handelt es sich bei der Stromkreisplatte 19 um eine Starkstromplatte, deren eines Ende mit dem Heizelement vom Warmwasserspeichers 1 verbunden wird, während das andere Ende (nicht dargestellt) über ein Kabel mit dem Steuerungsschalter (nicht dargestellt) verbunden wird, so dass der Nutzer über den Steuerungsschalter den Betriebszustand des Heizelementes steuern kann.

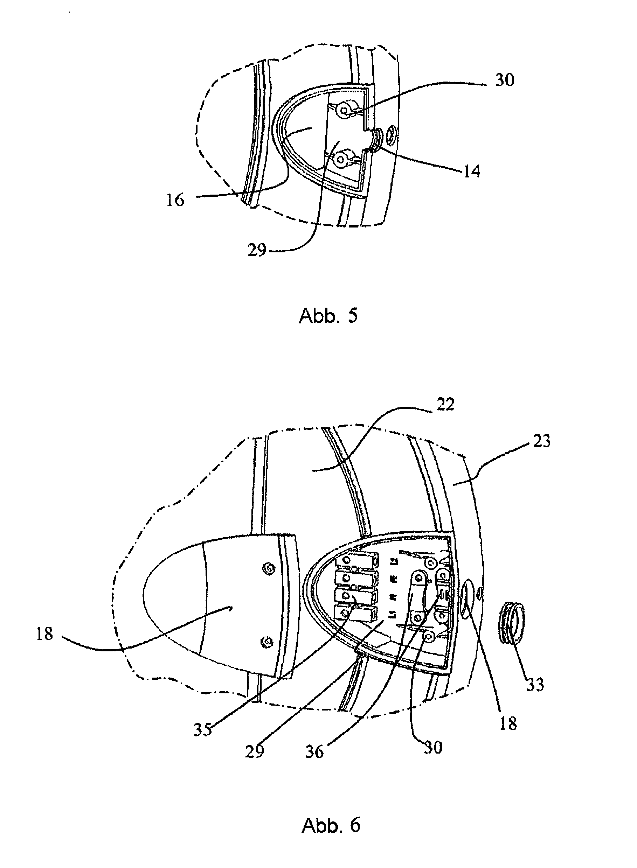

Bei dem vorliegenden praktischen Ausführungsbeispiel kann der Steuerungsschalter entsprechend der Auswahl des Nutzers an dem Gehäuse 2 des Warmwasserspeichers 1 angebracht werden beziehungsweise kann dieser außerhalb des Gehäuses 2 wie beispielsweise an einer Duschwand befestigt werden. Bei erstgenannter Variante kann der Steuerungsschalter durch eine interne Leitung mit dem Stromkreis 19 verbunden werden, wobei der Nutzer unmittelbar den an dem Warmwasserspeicher 1 befindlichen Steuerungsschalter bedient. Bei letztgenannter Variante müssen Kabel zur Verbindung der Stromkreisplatte 19 und Kabel des Steuerungsschalters jeweils aus dem Gehäuse 3 herausgeführt werden. Aus diesem Grund wird am Gehäuse 2 die Kabelausführungsöffnung 14 vorgesehen, damit das Kabel durch die Kabelausführungsöffnung 14 geführt werden kann, während sich das mit der Stromkreisplatte 19 verbundene Ende innerhalb vom Gehäuse 2 befindet. Das andere mit dem Steuerungsschalter verbundene Ende befindet sich hingegen außerhalb vom Gehäuse 2. Bei dem vorliegenden praktischen Ausführungsbeispiel wird die Kabelausführungsöffnung 14 an der Umrandungswand 23 der Endabdeckung 21 vorgesehen. Weil die Montage des Steuerungsschalters normalerweise der Auswahl durch den Nutzer unterliegt, erfolgt bei nicht erforderlicher Hinausführung des Kabels durch die betreffende Kabelausführungsöffnung 14 aus dem Gehäuse 2 hinaus die Abdichtung der Kabelausführungsöffnung 14 durch ein Dichtungsteil 34 (wie in Fig. 1 dargestellt). Bei erforderlicher Hinausführung des Kabels durch die betreffende Kabelausführungsöffnung 14 aus dem Gehäuse 2 hinaus wird das Dichtungsteil 34 hingegen herausgenommen (wie in Fig. 3 und Fig. 5 gezeigt), so dass die Kabelausführungsöffnung 14 offen ist und Kabel aufnehmen kann.

Zur Verbindung von einem Ende des Kabels mit der innerhalb vom Gehäuse 2 befindlichen Stromkreisplatte 19 wird in der Nähe von der Kabelausführungsöffnung 14 die Öffnung 16 vorgesehen. Die betreffende Öffnung 16 wird im Randbereich der Bodenplatte 22 vorgesehen.

Unter normalen Umständen wird die Öffnung 16 von der in beweglicher Art und Weise mit dem Gehäuse 2 verbundenen Abdeckung 18 verschlossen. Wie in Fig. 2 und Fig. 5 dargestellt, wird an der Öffnung 16 entsprechenden Stelle eine Stützwand 29 in paralleler Anordnung zur Bodenplatte 22 vorgesehen, welche sich von der Innenseite der Umrandungswand 21 der Endabdeckung 21 her erstreckt. An der betreffenden Stützwand 29 wird ein Aufnahmesockel 30 passend zum Befestigungselement 32 (bei vorliegendem praktischen Ausführungsbeispiel handelt es sich um Schrauben) zur Befestigung der Abdeckung 18 vorgesehen. Nach Befestigung von Abdeckung 18 an der Öffnung 16 wird das Befestigungselement 32 (siehe Fig. 1) in die entsprechenden Montagelöcher an der Abdeckung 18 gesteckt und mit einem Aufnahmesockel 30 in Übereinstimmung gebracht, um die Abdeckung 18 am Gehäuse 2 zu befestigen. Bei dem vorliegenden praktischen Ausführungsbeispiel wird entsprechend der Anzahl der Befestigungselemente 32 der Aufnahmesockel 30 in zwei Komponenten getrennt ausgeführt. Das Kabel wird durch den Spalt zwischen den beiden Aufnahmesockeln 30 geführt.

Es ist ersichtlich, dass die Abdeckung 18 unabhängig von der Wartungs- und Reparaturabdeckung 6 an der Endabdeckung 21 angebracht wird. Dies bedeutet, dass Wartungs- und Reparaturabdeckung 6 und Abdeckung 18 jeweils mit der Endabdeckung 21 verbunden werden, so dass diesbezüglich keine gegenseitige Störung durch die Montage der beiden Komponenten besteht. Aus diesem Grund muss das Wartungs- und Reparaturpersonal bei erforderlicher Abnahme der Wartungs- und Reparaturabdeckung 6 und/oder der Abdeckung 18 nicht zuvor die Abdeckung 18 abnehmen, bevor die Wartungs- und Reparaturabdeckung 6 abgenommen werden kann, beziehungsweise erst die Wartungs- und Reparaturabdeckung 6 abnehmen, bevor die Abdeckung 18 abgenommen werden kann. Wie in Fig. 2 und Fig. 3 gezeigt, besteht zwischen der Öffnung 16 und der Öffnung 4 ein Abstand. Entsprechend besteht auch ein Abstand zwischen Wartungs- und Reparaturabdeckung 6 und Abdeckung 18. Nach erfolgter Montage befinden sich Wartungs- und Reparaturabdeckung 6 und Abdeckung 18 auf der gleichen Ebene.

Um die zuverlässige Verbindung von Kabel und Warmwasserspeicher 1 sicherzustellen, weist der Warmwasserspeicher 1 eine Konstruktion zum Halten der Kabel auf, um zu verhindern, dass die Kabel unter Einwirkung externer Kräfte von den mit ihnen verbundenen elektrischen Elementen getrennt werden beziehungsweise die elektrischen Elemente beschädigt werden.

Bei einem vorteilhaften praktischen Ausführungsbeispiel wird das Kabel an der Kabelausführungsöffnung 14 festgehalten. Dies kann dadurch geschehen, dass an dem Kabel in Übereinstimmung mit der Kabelausführungsöffnung 14 ein Ausbuchtungsring vorgesehen wird, welcher über die äußere Oberfläche des Kabels hervorsteht und dessen Form und Abmessungen der Kabelausführungsöffnung 14 entsprechen, wobei der Ausbuchtungsring als ein Ganzes an dem Kabel vorgesehen wird. Der betreffende Ausbuchtungsring weist optimalerweise eine gewisse Elastizität auf, so dass zwischen Kabel und Kabelausführungsöffnung 14 eine Dichtung gebildet wird. Bei dem vorliegenden praktischen Ausführungsbeispiel wird zum Halten des Kabels an der Kabelausführungsöffnung 14 unter Bildung einer Dichtung eine durchgängige Verbindung von Kabelausführungsöffnung 14 und Öffnung 16 vorgesehen, damit auf diese Weise das Kabel zunächst durch die Öffnung 16 und durch das Gehäuse 2 geführt werden kann, um anschließend in die Kabelausführungsöffnung 14 gedrückt zu werden. Wie in Fig. 5 gezeigt, wird die Öffnung 16 im Randbereich der Bodenplatte 22 vorgesehen, während sich die Kabelausführungsöffnung 14 an der Umrandungswand 23 befindet, so dass die Ebene, auf welcher sich die Öffnung 16 befindet, senkrecht zu der Ebene, auf welcher sich die Kabelausführungsöffnung 14 befindet, positioniert wird. Dies wirkt sich positiv auf das Festhalten des Kabels aus.

Bei der Montage wird die die Öffnung 16 verschließende Abdeckung 18 von dem Gehäuse 2 abgenommen. Anschließend wird ein Ende des Kabels durch die Öffnung 16 ins Innere des Gehäuses 2 hineingeführt beziehungsweise aus dem Inneren des Gehäuses 2 nach außerhalb des Gehäuses 2 herausgeführt. Anschließend wird der entsprechende Teil des Kabels (also der Ausbuchtungsring) in die Kabelausführungsöffnung 14 gedrückt, so dass das Kabel auf diese Weise in der Kabelausführungsöffnung 14 festgehalten wird und eine Dichtung bildet. Danach wird die Abdeckung 18 an der Endabdeckung 21 befestigt, um die Öffnung 16 zu verschließen. Die Abdeckung 18 weist der Öffnung 16 entsprechende Abmessungen auf. Nach erfolgter Montage wird eine Seite der Abdeckung 18 an den Ausbuchtungsring gedrückt, so dass ein Herauslösen des Kabels aus der Kabelausführungsöffnung 14 hinaus verhindert wird.

Es ist offensichtlich, dass das mit der elektrischen Stromquelle verbundene Kabel auch mittels vorstehend aufgeführtem Planungsentwurf mit dem Warmwasserspeicher 1 verbunden werden kann. Bei einigen Warmwasserspeichern ist es andererseits nicht erforderlich, dass zwischen Steuerungsvorrichtung und Warmwasserspeicher eine Kabelverbindung besteht, beziehungsweise muss die Steuerungsvorrichtung nicht mittels Kabel von dem Warmwasserspeicher separiert werden. Aus diesem Grund wird zur Steigerung der Einsatzfähigkeit des Gehäuses 2 bei einem in Fig. 6 dargestellten anderen praktischen Ausführungsbeispiel die Kabelausführungsöffnung 14 so gestaltet, dass nicht nur die Durchführung des Kabels zur Verbindung mit dem Steuerungsschalter gestattet wird, sondern dass auch die Durchführung eines Kabels mit relativ großen Abmessungen zur Verbindung mit der elektrischen Stromquelle gestattet wird, wobei die Abmessungen der Kabelausführungsöffnung 14 größer sind als der Durchmesser des Kabels der elektrischen Stromquelle. Für die Abdichtung an der Kabelausführungsöffnung 14 zwischen Kabel und Gehäuse 2 wird ein aus Gummimaterial gefertigter Dichtungsring 33 vorgesehen. Bei der Montage wird der mittlere Bereich des Dichtungsringes 33 nach Durchführung des Kabels über das Kabel gezogen. Anschließend wird der Dichtungsring 33 innerhalb der Kabelausführungsöffnung 14 als Dichtung vorgesehen.

Zur Befestigung des Kabels wird an der Stützwand 29 ein Halteteil 36 vorgesehen. Der zwischen mit dem elektrischen Element verbundenen Ende des Kabels und Kabelausführungsöffnung 14 befindliche Teil des Kabels wird festgehalten. Zur Befestigung des Kabels innerhalb des Gehäuses 2 wird an einer der Stützwand 29 entsprechenden Stelle an der Endabdeckung 21 die Öffnung 16 vorgesehen, welche von der in abnehmbarer Art und Weise mit der Endabdeckung 21 verbundenen Abdeckung 18 verschlossen wird. Bei der Montage wird zunächst die Abdeckung 18 geöffnet, um anschließend das von der Kabelausführungsöffnung 14 in das Gehäuse 2 geführte Kabel mit dem entsprechenden elektrischen Element zu verbinden. Danach wird mit dem Halteteil 36 das Kabel innerhalb des Gehäuses 2 festgehalten. Zuletzt wird die Abdeckung 18 an der Öffnung 16 befestigt und mittels des Befestigungselements 32 wird die Abdeckung 18 an der Endabdeckung 21 befestigt.

Bei Verwendung der betreffenden Kabelausführungsöffnung 14 zur Durchführung eines Kabels mit Verbindung der elektrischen Stromquelle handelt es sich - wie in Fig. 6 dargestellt - bei m elektrischem Element um die an Stützwand 29 vorgesehene elektrische Verbindungsvorrichtung 35, wobei ein Ende der betreffenden elektrischen Verbindungsvorrichtung 35 mit dem innerhalb des Warmwasserspeichers 1 befindlichen Heizelement verbunden wird, während das andere Ende mittels Kabel mit der elektrischen Stromquelle verbunden wird.

### Bezugszeichenliste

- 1: Elektrisches Haushaltsgerät
- 2: Gehäuse
- 3: Hängeteil
- 4: Öffnung
- 6: Wartungs- und Reparaturabdeckung
- 8: Verbindungswand
- 80: Hakenteil
- 81: erster Teil
- 82: zweiter Teil
- 83: dritter Teil
- 84: vierter Teil
- 10: Rand der Verbindungswand 8
- 12: Einbuchtungsrille
- 14: Kabelausführungsöffnung
- 16: Öffnung
- 18: Abdeckung
- 19: Stromkreisplatte
- 20: Behälter
- 21: Endabdeckung
- 22: Bodenplatte
- 23: Umrandungswand
- 24: Halteplatte
- 25: Wand
- 26: Einbuchtungsteil
- 27: Verstärkungsrippen
- 28: Verbindungskonstruktion
- 29: Stützwand
- 30: Aufnahmesockel
- 31: Schmale Rille
- 32: Befestigungselement
- 33: Dichtungsring
- 34: Dichtungsteil
- 35: elektrische Verbindungsvorrichtung

- 36: Halteteil
- 40: Rand

## Patentansprüche

1. Warmwasserspeicher (1), welcher ein Gehäuse (2, 20, 21) sowie eine mit dem betreffenden Gehäuse (2, 21) in abnehmbarer Art und Weise verbundene Wartungs- und Reparaturabdeckung (6) zum Schließen einer Öffnung (4) aufweist, wobei das Gehäuse (2, 21) eine Öffnung (16) aufweist, welche dafür vorgesehen ist, zwischen einem Ende eines Kabels und den innerhalb des Gehäuses (2, 20, 21) befindlichen elektrischen Elementen (19, 35) eine Verbindung herzustellen, wobei die Öffnung (16) von einer in abnehmbarer Art und Weise mit dem Gehäuse (2, 21) verbundenen Abdeckung (18) zumindest teilweise verschlossen wird und wobei nach erfolgter Verbindung des Kabels mit den elektrischen Elementen (19, 35) sich das andere Ende des Kabels außerhalb des Gehäuses (2, 20, 21) befindet, **dadurch gekennzeichnet, dass** die Abdeckung (18) unabhängig von der Wartungs- und Reparaturabdeckung (6) an dem Gehäuse (2, 21) anbringbar ist, dergestalt, dass Montage und Demontage beider Komponenten unabhängig voneinander möglich sind.

2. Warmwasserspeicher (1) gemäß Patentanspruch 1, **dadurch gekennzeichnet, dass** die Abdeckung (18) einen Abstand zu der Wartungs- und Reparaturabdeckung (6) aufweist.

3. Warmwasserspeicher (1) gemäß Patentanspruch 1 oder 2, **dadurch gekennzeichnet, dass** das Gehäuse (2, 21) eine Kabelausführungsöffnung (14) zur Durchführung des Kabels aufweist, wobei die betreffende Kabelausführungsöffnung (14) sich in der Nähe von der Öffnung (16) befindet.

4. Warmwasserspeicher (1) gemäß Patentanspruch 3, **dadurch gekennzeichnet, dass** die Ebene, auf welcher sich die Öffnung (16) befindet, senkrecht zu der Ebene, auf welcher sich die Kabelausführungsöffnung (14) befindet, positioniert ist.

5. Warmwasserspeicher (1) gemäß Patentanspruch 3 oder 4, **dadurch gekennzeichnet, dass** das Kabel an der Kabelausführungsöffnung (14) festgehalten wird.

6. Warmwasserspeicher (1) gemäß Patentanspruch 3, 4 oder 5, **dadurch gekennzeichnet, dass** die Öffnung (16) mit der Kabelausführungsöffnung (14) durchgängig verbunden ist.

7. Warmwasserspeicher (1) gemäß einem der vorhergehenden Patentansprüche 3 bis 6, **dadurch gekennzeichnet, dass** der zwischen dem elektrischen Element (35) und der Kabelausführungsöffnung (14) befindliche Teil des Kabels festgehalten wird.

8. Warmwasserspeicher (1) gemäß einem der Patentansprüche 3 bis 4, **dadurch gekennzeichnet, dass** bei fehlender Durchführung eines Kabels durch die Kabelausführungsöffnung (14) die Kabelausführungsöffnung (14) geschlossen wird.

9. Warmwasserspeicher (1) gemäß einem der vorhergehenden Patentansprüche **dadurch gekennzeichnet, dass** das Gehäuse (2, 20, 21) einen Behälter (20) sowie eine mit dem Behälter (20) verbundene Endabdeckung (21) aufweist, wobei die Wartungs- und Reparaturabdeckung (6) und die Abdeckung (18) jeweils mit der Endabdeckung (21) verbunden werden.

10. Warmwasserspeicher (1) gemäß Patentanspruch 9, **dadurch gekennzeichnet, dass** die Endabdeckung (21) eine Bodenplatte (22) sowie eine sich aus der betreffenden Bodenplatte (22) heraus erstreckende und im Wesentlichen senkrecht zu der betreffenden Bodenplatte (22) positionierte Umrandungswand (23) aufweist, wobei die Abdeckung (18) und die Wartungs- und Reparaturabdeckung (6) jeweils mit der Bodenplatte (22) verbunden werden.

11. Warmwasserspeicher (1) gemäß Patentanspruch 10, **dadurch gekennzeichnet, dass** die Kabelausführungsöffnung (14) an der Umrandungswand (23) gebildet wird.

12. Warmwasserspeicher (1) gemäß Patentanspruch 10 oder 11, **dadurch gekennzeichnet, dass** die Endabdeckung (21) eine innerhalb des Gehäuses (2, 20, 21) befindliche und parallel zu der Bodenplatte (22) vorgesehene Stützwand (29) aufweist, wobei die betreffende Stützwand (29) einen Aufnahmesockel (30) bildet, welcher passend zu dem zur Befestigung der Abdeckung (18) vorgesehenen Befestigungselement (32) vorgesehen wird.

13. Warmwasserspeicher (1) gemäß Patentanspruch 12, **dadurch gekennzeichnet, dass** sich die Stützwand (29) von der Innenseite der Umrandungswand (23) her erstreckt.

14. Warmwasserspeicher (1) gemäß einem der vorhergehenden Patentansprüche, **dadurch gekennzeichnet, dass** sich die Wartungs- und Reparaturabdeckung (6) und die Abdeckung (18) auf der gleichen Ebene befinden.

15. Warmwasserspeicher (1) gemäß einem der vorhergehenden Patentansprüche, **dadurch gekennzeichnet, dass** die Wartungs- und Reparaturabdeckung (6) eine an ihrer Innenseite vorgesehene Verbindungswand (8) zur Verbindung mit dem Gehäuse (2, 20, 21) aufweist, wobei die Verbindungswand (8) zumindest teilweise Abstand zu dem Rand (10) der Wartungs- und Reparaturabdeckung (6) hält.

16. Warmwasserspeicher (1) gemäß einem der vorhergehenden Patentansprüche , **dadurch gekennzeichnet, dass** ein außerhalb des Gehäuses (2, 20, 21) befindliches Ende des Kabels mit einem zur Steuerung des elektrischen Haushaltsgeräts (1) verwendeten Steuerungsschalter verbunden wird.

17. Warmwasserspeicher (1) gemäß einem der vorhergehenden Patentansprüche, **dadurch gekennzeichnet, dass** es sich bei dem betreffenden elektrischen Haushaltsgerät (1) um einen Warmwasserspeicher (1) handelt, welcher einen Wasserspeicherbehälter sowie eine Wärmeisolationsschicht aufweist, die zwischen dem m Gehäuse (2, 20, 21) und dem Wasserbehälter vorgesehen wird.

## Claims

1. Hot-water cylinder (1), which comprises a housing (2, 20, 21) as well as a maintenance and repair lid (6), which is connected with the respective housing (2, 21) in removable mode and manner, for closing an opening (4), wherein the housing (2, 21) has an opening (16) which is provided for the purpose of producing a connection between an end of a cable and the electrical elements (19, 35) located within the housing (2, 20, 21), wherein the opening (16) is at least partly closed by a cover (18) connected with the housing (2, 21) in removable mode and manner and wherein after connection of the cable with the electrical elements (19, 35) has taken place the other end of the cable is located outside the housing (2, 20, 21), **characterised in that** the cover (18) is mountable on the housing (2, 21) in dependently of the maintenance and repair lid (6) in such a manner that mounting and demounting of the two components independently of one another are possible.

2. Hot-water cylinder (1) according to claim 1, **characterised in that** the cover (18) has a spacing from the maintenance and repair lid (6).

3. Hot-water cylinder (1) according to claim 1 or 2, **characterised in that** the housing (2, 21) has a cable lead-out aperture (14) for passage of the cable, wherein the respective cable lead-out aperture (14) is disposed in the vicinity of the opening (16).

4. Hot-water cylinder (1) according to claim 3, **characterised in that** the plane on which the opening (16) is disposed is positioned perpendicularly to the plane on which the cable lead-out aperture (14) is disposed.

5. Hot-water cylinder (1) according to claim 3 or 4, **characterised in that** the cable is fixed at the cable lead-out aperture (14).

6. Hot-water cylinder (1) according to claim 3, 4 or 5, **characterised in that** the opening (16) is continuously connected with the cable lead-out aperture (14).

7. Hot-water cylinder (1) according to any one of the preceding claims 3 to 6, **characterised in that** the part of the cable between the electrical element (35) and the cable lead-out aperture (14) is fixed.

8. Hot-water cylinder (1) according to one of claims 3 and 4, **characterised in that** in the absence of passage of a cable through the cable lead-out aperture (14) the cable lead-out aperture (14) is closed.

9. Hot-water cylinder (1) according to any one of the preceding claims, **characterised in that** the housing (2, 20, 21) comprises a container (20) as well as an end cover (21) connected with the container (20), wherein the maintenance and repair lid (6) and the cover (18) are respectively connected with the end cover (21).

10. Hot-water cylinder (1) according to claim 9, **characterised in that** the end cover (21) comprises a base plate (22) as well as a bordering wall (23) which extends from the respective base plate (22) and is positioned substantially perpendicularly to the respective base plate (22), wherein the cover (18) and the maintenance and repair lid (6) are respectively connected with the base plate (22).

11. Hot-water cylinder (1) according to claim 10, **characterised in that** the cable lead-out aperture (14) is formed at the bordering wall (23).

12. Hot-water cylinder (1) according to claim 10 or 11, **characterised in that** the end cover (21) comprises a support wall (29) disposed within the housing (2, 20, 21) and provided parallel to the base plate (22), wherein the respective support wall (29) forms a receiving socket (30) which is provided to match with the fastening element (32) provided for fastening the cover (18).

13. Hot-water cylinder (1) according to claim 12, **characterised in that** the support wall (29) extends from the inner side of the bordering wall (23).

14. Hot-water cylinder (1) according to any one of the preceding claims, **characterised in that** the maintenance and repair lid (6) and the cover (18) are disposed on the same plane.

15. Hot-water cylinder (1) according to any one of the preceding claims, **characterised in that** the maintenance and repair lid (6) has a connecting wall (8), which is provided at its inner side, for connection with the housing (2, 20, 21), wherein the connecting wall (8) maintains at least in part a spacing from the edge (10) of the maintenance and repair lid (6).

16. Hot-water cylinder (1) according to any one of the preceding claims, **characterised in that** an end, which is located outside the housing (2, 20, 21), of the cable is connected with a control switch used for controlling the electric domestic appliance (1).

17. Hot-water cylinder (1) according to any one of the preceding claims, **characterised in that** the respective electric domestic appliance (1) is a hot-water cylinder (1) comprising a hot-water container and a thermal insulation layer which is provided between the housing (2, 20, 21) and the water container.

## Revendications

1. Chauffe-eau à accumulation (1), lequel présente un boîtier (2, 20, 21) ainsi qu'un couvercle de maintenance et de réparation (6) raccordé de manière amovible audit boîtier (2, 21), destiné à obturer une ouverture (4), le boîtier (2, 21) présentant une ouverture (16), laquelle est ménagée pour établir une liaison entre une extrémité d'un câble et des éléments électriques (19, 35) se trouvant à l'intérieur du boîtier (2, 20, 21), l'ouverture (16) étant fermée au moins en partie par un couvercle (18) raccordé au boîtier (2, 21) de manière amovible, et l'autre extrémité du câble se trouvant à l'extérieur du boîtier (2, 20, 21) après la réalisation de la liaison du câble avec les éléments électriques (19, 35), **caractérisé en ce que** le couvercle (18) peut être installé sur le boîtier (2, 21) indépendamment du couvercle de maintenance et de réparation (6) de manière à ce que le montage et le démontage des deux composants soient possibles indépendamment l'un de l'autre.

2. Chauffe-eau à accumulation (1) selon la revendication 1, **caractérisé en ce que** le couvercle (18) présente un écart par rapport au couvercle de maintenance et de réparation (6).

3. Chauffe-eau à accumulation (1) selon la revendication 1 ou 2, **caractérisé en ce que** le boîtier (2, 21) présente un orifice de sortie de câble (14) pour le passage du câble, ledit orifice de sortie de câble (14) se trouvant à proximité de l'ouverture (16).

4. Chauffe-eau à accumulation (1) selon la revendication 3, **caractérisé en ce que** le plan sur lequel se trouve l'ouverture (16) est positionné perpendiculairement au plan sur lequel se trouve l'orifice de sortie de câble (14).

5. Chauffe-eau à accumulation (1) selon la revendication 3 ou 4, **caractérisé en ce que** le câble est maintenu sur l'orifice de sortie de câble (14).

6. Chauffe-eau à accumulation (1) selon la revendication 3,4 ou 5, **caractérisé en ce que** l'ouverture (16) est raccordée en continu avec l'orifice de sortie de câble (14).

7. Chauffe-eau à accumulation (1) selon l'une quelconque des revendications précédentes 3 à 6, **caractérisé en ce que** la partie du câble se trouvant entre l'élément électrique (35) et l'orifice de sortie de câble (14) est fixée.

8. Chauffe-eau à accumulation (1) selon l'une quelconque des revendications 3 à 4, **caractérisé en ce qu'**en cas de traversée manquante d'un câble à travers l'orifice de sortie de câble (14), l'orifice de sortie de câble (14) est fermé.

9. Chauffe-eau à accumulation (1) selon l'une quelconque des revendications précédentes, **caractérisé en ce que** le boîtier (2, 20, 21) présente un réservoir (20) ainsi qu'un couvercle terminal (21) raccordé au réservoir (20), le couvercle de maintenance et de réparation (6) et le couvercle (18) étant respectivement raccordés au couvercle terminal (21).

10. Chauffe-eau à accumulation (1) selon la revendication 9, **caractérisé en ce que** le couvercle terminal (21) présente une plaque de fond (22) ainsi qu'une paroi d'entourage (23) s'étendant hors de ladite plaque de fond (22) et positionnée essentiellement perpendiculairement à ladite plaque de fond (22), le couvercle (18) et le couvercle de maintenance et de réparation (6) étant respectivement raccordés à la plaque de fond (22).

11. Chauffe-eau à accumulation (1) selon la revendication 10, **caractérisé en ce que** l'orifice de sortie de câble (14) est formé sur la paroi d'entourage (23).

12. Chauffe-eau à accumulation (1) selon la revendication 10 ou 11, **caractérisé en ce que** le couvercle terminal (21) présente une paroi de support (29) se trouvant à l'intérieur du boîtier (2, 20, 21) et ménagée parallèlement à la plaque de fond (22), ladite paroi de support (29) formant un socle de logement (30), lequel est ménagé de manière adaptée à l'élément de fixation (32) ménagé pour la fixation du couvercle (18).

13. Chauffe-eau à accumulation (1) selon la revendication 12, **caractérisé en ce que** la paroi de support (29) s'étend en provenance du côté intérieur de la paroi d'entourage (23).

14. Chauffe-eau à accumulation (1) selon l'une quelconque des revendications précédentes, **caractérisé en ce que** le couvercle de maintenance et de réparation (6) et le couvercle (18) se trouvent sur le même plan.

15. Chauffe-eau à accumulation (1) selon l'une quelconque des revendications précédentes, **caractérisé en ce que** le couvercle de maintenance et de réparation (6) présente une paroi de liaison (8) ménagée sur son côté intérieur pour la liaison avec le boîtier (2, 20, 21), la paroi de liaison (8) maintenant en partie un écart par rapport au bord (10) du couvercle de maintenance et de réparation (6).

16. Chauffe-eau à accumulation (1) selon l'une quelconque des revendications précédentes, **caractérisé en ce qu'**une extrémité du câble se trouvant à l'extérieur du boîtier (2, 20, 21) est raccordée à un commutateur de commande utilisé pour la commande de l'appareil ménager électrique (1).

17. Chauffe-eau à accumulation (1) selon l'une quelconque des revendications précédentes, **caractérisé en ce que** ledit appareil ménager électrique (1) est un chauffe-eau à accumulation, lequel présente un réservoir d'eau ainsi qu'une couche d'isolation thermique qui est ménagée entre le boîtier (2, 20, 21) et le réservoir d'eau.
